# EUROPEAN PATENT SPECIFICATION

(11) **EP 0 740 761 B1**
(45) Date of publication and mention of the grant of the patent: **06.09.2000**
(21) Application number: 95905670.6
(22) Date of filing: 23.01.1995
(51) Int. Cl.: F24F 5/00, F24F 3/10, F24D 10/00

(54) **A DISTRICT THERMAL ENERGY DISTRIBUTION SYSTEM**
FERNWÄRMEENERGIEVERTEILUNGSSYSTEM
SYSTEME URBAIN DE DISTRIBUTION D'ENERGIE THERMIQUE

(30) Priority: 24.01.1994 FI 940342
(43) Date of publication of application: 06.11.1996
(73) Proprietor: ABB INSTALLAATIOT OY, 21530 Paimio (FI)
(72) Inventor: LESKINEN, Seppo, (FI); ROLIN, Ingmar, FIN-02730 Espoo (FI)
(74) Representative: Valkeiskangas, Tapio Lassi Paavali
(86) International application number: FI9500029
(87) International publication number: WO9520134

(56) References cited:
- WO-A-93/10403
- WO-A-93/18350
- CH-A- 413 288
- DE-A- 2 817 093
- DE-B- 1 210 538
- DE-B- 1 269 318
- US-A- 3 288 205

## Description

The invention relates to a thermal energy distribution system in which thermal energy bound to a heat carrier and concentratedly generated for heating and/or cooling of buildings is arranged to be distributed to heating devices of buildings by means of one pipe or one group of pipes and, correspondingly, cooling energy is arranged to be distributed to cooling devices by means of another pipe or group of pipes.

US-A-3 288 205 shows a typical air-conditioning system which is intended to be used in one building. The system relates only to air-conditioning which is only one part of thermal systems of a building and if the problems to be solved relate to several buildings the system shown in said US document can not be used.

In many countries, buildings are generally heated by district heat generated in large, concentrated heating plants, which is cheaper and less hazardous to the environment than having a boiler in each house. In large heating plants like this, e.g. impurities contained in flue gases can be removed effectively at a reasonable cost. In large heating plants, the efficiency of the heat production is essentially higher than in small-scale plants, and the maintenance and running costs of large plants are also smaller than those of small plants.

Production of heat is especially inexpensive when the productions of electricity and heat are combined, whereby heat is obtained as condensate heat from the steam turbine and thus, in a way, without any costs. In plants that produce electricity only, the steam outlet from the turbine is condensated with water obtained from waterways or special condensing towers; in the combined production of electricity and heat, it can be condensated with the return water of the district heating system, which in the heated state is used for the heating of buildings.

Today buildings receive not only heating power but also cooling power via a piping network. Water is cooled in ammonia compressor plants by means of absorption heat pumps, sea-water coolers, or the like. Cold water is pumped through a supply pipe to buildings, where it cools the ventilation air and the radiation coolers or the like, and returns, heated, to the central cooling plant. One basic reason for this is the aim of disposing of coolants that cause ozone depletion.

The heating and cooling demand vary with the building, as so does the electricity demand in the electric network. Apparatus for production and transmission of energy must naturally be designed in accordance with the maximum demand, which is naturally uneconomic. Other consequences are uneconomic production, lower than maximum efficiency of energy production, deterioration in the production ratio between electricity and heat, etc. Particularly detrimental are different short-term load peaks: in respect of the cooling demand, e.g. the peaks reached in a few summer afternoons, and in respect of the heating demand, so-called Monday morning peaks, which occur during the heating period as the room temperature lowered for the weekend is raised back to normal in business premises and the like. To cut these peaks of electricity demand, the extra heat must be condensated with cooling water e.g. in gas turbine plants - even where back-pressure power plants are concerned - during the load peaks.

The above drawbacks are eliminated by using different thermal accumulators, so-called heat accumulators and cooling tanks, usually arranged in connection with an energy production plant. For example, cooling loads are levelled down by ice tanks or cold water accumulators, and heating peaks by heat accumulators or the like with a volume of even thousands of cubic metres. Peaks in the use of electricity can also be levelled down in this way by storing the extra heat generated during a peak.

Since accumulators naturally require heavy investments, their peak-levelling effect is restricted. Economy of accumulators placed in power plants is further reduced by the fact that the energy transmission network must in any case be designed in accordance with the peak load. Thus accumulators installed in energy production plants are not widely used.

Another kind of approach is provided by accumulators arranged in buildings. The best known accumulators of this kind are boilers for hot tap water and so-called house accumulators, which store heat generated by night electricity. Such accumulators are not widely used, either, since - quite naturally - the builders have difficulties in understanding their overall effect on the complicated process of producing and distributing energy and, above all, in justifying the effect they have on the producers and distributors of energy. Further, the investments required per one unit of heat are heavy.

What has restricted the combined generation of heat and cold is that in buildings connected to networks, heating and cooling power are needed simultaneously, due to differences in the location, heat load, use, etc. of the building or premises as compared with another building. The systems thus require supply and return pipes for heating and for cooling, i.e. four pipes in all.

Several different systems have been developed in the art to lower the costs. An example for such systems is the heat transmission system for buildings disclosed in Finnish Patent Application 921,034; by the system, the temperature of the return water in a district heating system can be dropped notably low, down to about 20°C, if necessary. The basic idea of the system is that the heat carrier first emits heat for the heating of the building and then for the heating of the ventilation air.

The object of the invention is to provide a system by which the problems of the prior art can be eliminated. This is achieved with the system of the invention, which is characterized in that the temperatures of the heat carriers returning from the cooling and heating devices are adjusted to be essentially equal, and that the heat carriers are arranged to be returned to the energy production plant by means of a common return pipe or group of return pipes.

The major advantage of the invention is that one of the four pipes used earlier can be eliminated, whereby essentially smaller investments are needed than in the prior art. The elimination of one pipe does not essentially reduce the characteristics or performance of the system as compared with the prior art systems. Another advantage of the invention is that, by a certain application, a notably large heat accumulator becomes available - literally without any costs - especially for levelling down the heat consumption peaks. Further, the invention also makes it possible to make the pipes essentially smaller, and thereby obtain the piping needed for distribution of cooling energy almost without any costs. The basic idea of the invention can be utilized in constructing piping systems comprising piping arrangements with various energy levels; the return liquid from one system can thereby be used as an effective liquid in another system. All in all, the applications of the invention essentially lower the costs of combined systems and make the use of energy more effective.

In the following, the invention will be described in greater detail with reference to the embodiments depicted in the attached drawing, wherein
Fig. 1 shows temperature duration curves of three different locations in Finland,
Fig. 2 shows one embodiment of the system according to the invention during a cooling period,
Fig. 3 shows a cross-sectional view taken along the line III-III of Fig. 2,
Fig. 4 shows the system of Fig. 2 during a heating period,
Fig. 5 shows a cross-sectional view taken along the line V-V of Fig. 4,
Fig. 6 shows a second embodiment of the system according to the invention,
Fig. 7 shows a cross-sectional view taken along the line VII-VII of Fig. 6,
Fig. 8 shows a third embodiment of the system according to the invention,
Fig. 9 shows a cross-sectional view taken along the line IX-IX of Fig. 8, and
Fig. 10 shows a cross-sectional view of a fourth embodiment of the system according to the invention.

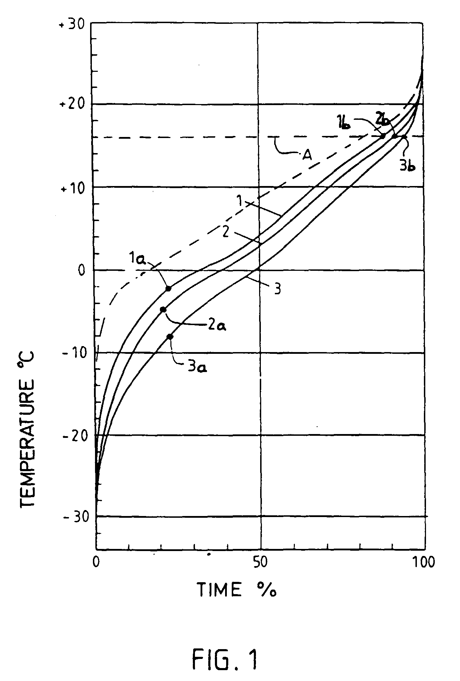

In fact, the invention is based on the observation that the peaks of heating and cooling demand do not coincide. Fig. 1 shows the temperature duration curves for outdoor air in three different locations in Finland, drafted on the basis of observations on weather made in 1961 to 1980. Curve 1 is based on the measurements carried out by the Meteorological Institute at Helsinki-Vantaa airport. Curve 2 is based on similar measurements conducted at Jyväskylä airport. Curve 3, in turn, is based on measurements performed at Rovaniemi airport.

The temperatures used in designing the heating devices and the heat transmission network are -26°C in Helsinki, -32°C in Jyäskylä and -38°C in Rovaniemi. If, for simplicity, it is assumed that the heat demand of a building is directly proportional to the difference in the outdoor and indoor temperatures and that the indoor temperature is +22°C, it is simple to determine when the heat demand of the building has reduced to a half of the design heat demand. These values of the outdoor temperature in Fig. 1 are as follows: -2°C in Helsinki, point 1a; -5°C in Jyväskylä, point 2a; and -8°C in Rovaniemi, point 3a. In reality, the situation is not this simple, since hot tap water is always needed in the building, and the proportion of hot water to the total energy consumption varies with the building type. The peak of consumption is cut e.g. by decreasing the air currents of the ventilation system. Yet even on the basis of the above simple presentation, it is possible to state that, on the average, the heat consumption of the buildings has definitely reduced to less than a half by the time the outdoor temperature approaches +10°C.

The demand for cooling a building by external energy varies considerably. In dwelling houses, cooling is seldom necessary; in old business premises, cooling may become necessary at a temperature of +18° to +20°C; and in new buildings with a large number of people and a large amount of so-called new technology, cooling may become necessary when the outdoor temperature is +12° to +16°C. Some of the buildings, e.g. educational establishments, are either not used at all or are under-used during the maximum demand on account of summer holidays. On the average, cooling may become necessary at about 16°C - line A and points 1b, 2b and 3b in Fig. 1 - and, estimated in this manner, does not reach the 50% level until at about 22°C.

All in all, the difference between the outdoor temperatures at which the heating or cooling demand exceeds 50% is so great - clearly above 10°C - that the return pipe of the distribution network cannot be over-loaded due to simultaneous use. When the network is considered as a whole, the difference is so great that not even individual buildings where heating and cooling energy is not exclusively needed for the building can change the overall situation of the community.

The above is a discussion of the temperature duration in Finland. The same applies in all climatic zones where buildings have to be both heated and cooled. The broken line in Fig. 1 is a duration curve concerning Denmark. As it can be seen, the general nature of the figure does not change. In most of Europe, the decisive factor in determining the size of the return pipe is the heating demand, but e.g. in the North of Italy, the cooling demand.

The simple basic idea of the invention is that the return temperatures of the heating and cooling water are designed to be identical, and that the heating and cooling water are returned through a common return pipe. One return pipe is thus disposed of.

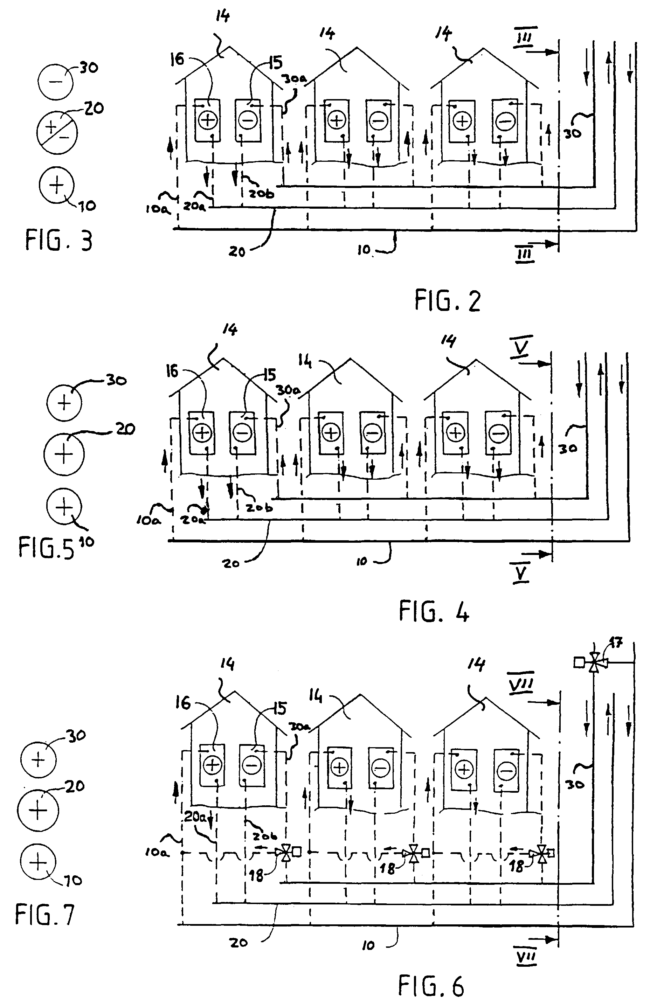

The operation and possible embodiments of the system according to the invention are described in greater detail in the following with reference to Figs. 2 to 10.

Figs. 1 to 4 show a network where the water currents for the heating and cooling power are equal in the design situation. Figs. 2 and 3 show the situation during the cooling period. In pipe 10 there flows heating water used for producing hot tap water and - in spring and autumn - for heating buildings 14. In pipe 30 there flows cooling water. Pipe 20 is a common return pipe, and it must be so designed that it can hold the water current of the maximum heating demand on the one hand and the water current of the maximum cooling demand on the other hand, plus the water current needed for the production of hot tap water. Cooling devices and heating devices are indicated by reference numbers 15 and 16. Heating water is supplied to heating devices 16 via branch pipe 10a, and cooling water is supplied to cooling devices 15 via branch pipe 30a. The heating water is returned to the return pipe 20 via return branch pipe 20a, and the cooling water via return branch pipe 20b.

If the hot water pipe 10 and the cold water pipe 30 are assumed to be equal in size, e.g. 300 mm in diameter, the water current in both is about 305 m³/h, if the allowed rate of water is 1.2 m/s. If the temperature of the hot supply water is 105°C and that of the cold supply water is 7°C and the return temperature of both is 25°C, the maximum heating power is 28.4 MW and the maximum cooling power is about 5.7 MW. This seems to be in line with the Finnish urban structure and climate, since in Finland, most of the buildings do not have a cooling system since the cooling period is so short and the winter is really cold. In the south, the cooling demand may become the decisive factor.

When the return pipe 20 is designed, the demand for hot tap water must be taken into account, whereby the cooling situation with the above-described assumptions is decisive. If the hot tap water is assumed to make up an average of 20% of the daily heating power, the water current in the return pipe is 366 m³/h and the diameter of the return pipe is 330 mm. If, on the other hand, all the pipes are desired to be of the same size, the temperature of the cooling water should be about 3.5°C, or the maximum cooling power about 4.8 MW. In any case, only one additional pipe is needed for the coolant.

Figs. 4 and 5 show how the above embodiment operates in winter. Water with a temperature of 100° to 115°C is supplied through the hot water pipe 10 for the heating of the buildings 14 and for the production of hot tap water. The water returns through the return pipe 20. Since cooling is not needed, the cold water pipe 30 is not in use.

If the cold water pipe 30 is connected by a bypass valve 17 to the hot water supply pipe 10 of the heating plant in the manner shown in Fig. 6, and further in accordance with Fig. 6, by another bypass valve 18 to the hot water supply pipe 10 in the building 14, then the cold water pipe 30 can be utilized in winter also. The cold water pipe can be filled with hot water when there is little consumption, e.g. during the night or weekend. This water can then be used for levelling down the peak load.

If in accordance with the above, the diameter of the cold water pipe 30 is 300 mm and the length of the pipe is e.g. 3000 mm, then the pipe can hold 212 m³ of water. This is enough for cutting a 20% overload for 3.5 hours, if the design power of the hot water network is 28.5 MW and the difference in temperature is 80°C. Thus there is a considerably large heat accumulator available almost free; the only costs are caused by two 2-position bypass valves 17, 18. The above 330 mm return pipe 20 is sufficient for the total quantity of water.

The invention reduces the design power of the entire heating plant, so it has a great economic effect. Further, this additional power is pre-distributed over the area of use, i.e. the hot water pipe can be designed for 80% of the water current required by the maximum power, which is not the case when heat tanks placed in a power plant are used. The system of the invention in fact corresponds to a peak heating plant located in the network outside the heating plant; such plants are generally used for cutting load peaks.

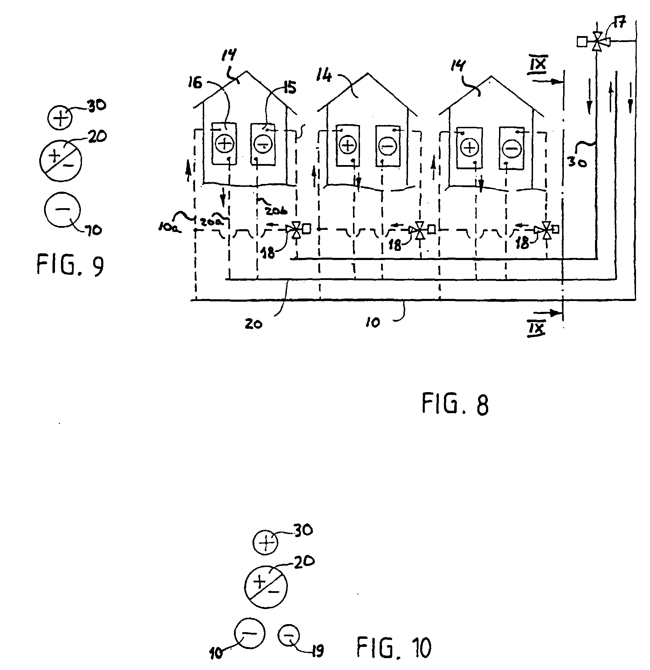

Figs. 8 and 9 show yet another embodiment of the invention. In this embodiment, the hot water pipe 10 is designed in view of only the power existing when the cooling becomes necessary as well as the power required by the hot tap water, i.e. in all, a power that is 30 to 35% of the design power. The cooling water pipe 30 is designed in view of the cooling power demand, if the water current required by it is at least 65 to 70% of the water current required by the design heating power. If it is less than that, the pipe 30 is designed on the basis of the heating power. In this case, the cooling does in fact not require any piping capacity, since the heating water pipe is simply divided into two and one of the parts is reserved for cooling water needed in summer. The additional investments in the pipe network necessitated by the cooling are very small: the difference in price between one big pipe and two smaller pipes with a cross-sectional area that is the same as that of the big pipe is very small. The costs are 10 to 20% of the costs of the known systems.

In the embodiment of Fig. 10, two kinds of cooling power are delivered. This embodiment resembles the embodiment of Figs. 8 and 9. In pipe 30 flows water having a temperature of e.g. +7°C and needed for the cooling of buildings, whereas in pipe 19 there flows colder water (e.g. +2°C) e.g. for cooling the refrigerated display cases in food shops. Pipe 30 can now operate as the return pipe for pipe 19, since the water returning from the display cases at a temperature of 5° to 7°C is well-suited for the cooling of buildings. In a way, the water is thus used twice. Because of this, pipe 30 can be designed to be smaller. Naturally, no return pipe is needed for pipe 19. The effect on the costs is similar as in the embodiment of Fig. 8, i.e. two kinds of cooling power can be delivered with very small extra costs. Further, the embodiment of Fig. 10 makes it possible to deliver cooling power in winter also.

The above embodiments are not intended to restrict the invention, but the invention can be modified quite freely within the scope of the claims. It is thus to be understood that the system according to the invention or the details thereof need not be identical to those presented in the figures, but that other kinds of solutions are also possible. For example, an absorption aggregate or some other source of cold need not be placed in a power plant but it may be located somewhere in the piping network as a so-called sub-centre, or even serve a biggish, individual building, such as a hospital complex. The energy is then delivered to the absorption aggregate in the form of heat by a normal 2-pipe system, and transmitted further by a 3- or multi-pipe system in accordance with the above. The drawback in a system like this is the high temperature of supply water in a district heating system, as well as maintenance, service, etc.

## Claims

1. A district thermal energy distribution system in which thermal energy bound to a heat carrier and concentratedly generated for heating and/or cooling of buildings is arranged to be distributed to heating devices (16) of a plurality of buildings (14) by means of one pipe or one group of pipes (10) and, correspondingly, cooling energy is arranged to be distributed to cooling devices (15) by means of another pipe or group of pipes (30), **characterized** in that the system has been designed so that temperatures of the heat carriers returning from the cooling and heating devices (15,16) of the plurality of buildings are essentially equal, during the period when both heating and cooling effect are needed and that the heat carriers are arranged to be returned to the energy production plant by means of a common return pipe or group of common return pipes (20).

2. A distribution system according to claim 1, **characterized** in that the pipe or group of pipes (30) for transmitting cooling energy is connected to the pipe or group of pipes (10) for transmitting heating energy by valve means or the like (17) and, correspondingly, in the building or vicinity of the building, by a second valve means or the like (18), so that when said valve means (17,18) are in the open position, the pipe or group of pipes (30) for transmitting cooling energy can be used for storing the hot heat carrier.

3. A distribution system according to claim 1 and 2, **characterized** in that the pipe or group of pipes (30) for transmitting cooling energy is arranged by the valve means (17,18) to be used as a pipe or group of pipes transmitting heating energy.

4. A distribution system according to claims 1 to 3, **characterized** in that the pipe for transmitting cooling energy is divided into two or more pipes (30,19) so as to transfer heat carriers of different temperatures.

5. A distribution system according to claim 4, **characterized** in that the pipe (30) containing liquid of a higher temperature is arranged to operate as a return pipe for the pipe (19) containing liquid of a lower temperature.

## Patentansprüche

1. Fernwärmeenergie-Verteilungssystem, in welchem thermische Energie, die an einen Wärmeträger gebunden ist und konzentriert zum Heizen und/oder Kühlen von Gebäuden erzeugt wird, angeordnet ist, zu Heizeinrichtungen (16) einer Vielzahl von Gebäuden (14) mittels eines Rohres oder einer Gruppe von Rohren (10) verteilt zu werden, und entsprechend Kühlenergie angeordnet ist, zu Kühleinrichtungen (15) mittels eines weiteren Rohres oder einer Gruppe von Rohren (30) verteilt zu werden,
dadurch **gekennzeichnet,** dass das System derart ausgelegt ist, dass die Temperaturen der Wärmeträger, die von den Kühl- und Heizeinrichtungen (15, 16) der Vielzahl von Gebäuden zurückkehren, im wesentlichen gleich sind während der Periode, wenn sowohl eine Heiz- wie auch eine Kühlwirkung benötigt wird, und dass die Wärmeträger angeordnet sind, zu der Energieerzeugungsanlage mittels eines gemeinsamen Rücklaufrohrs oder einer Gruppe von gemeinsamen Rücklaufrohren (20) zurückgebracht zu werden.

2. Verteilungssystem nach Anspruch 1, dadurch gekennzeichnet, dass das Rohr oder die Gruppe von Rohren (30) zum Übertragen von Kühlenergie mit dem Rohr oder der Gruppe von Rohren (10) zum Übertragen der Wärmeenergie über eine Ventileinrichtung oder dergleichen (17), und entsprechend in dem Gebäude oder in der Nähe des Gebäudes über eine zweite Ventileinrichtung oder dergleichen (18) verbunden ist, so dass, wenn die Ventileinrichtungen (17, 18) in der offenen Stellung sind, das Rohr oder die Gruppe von Rohren (20) zum Übertragen von Kühlenergie zum Speichern des heißen Wärmeträgers verwendet werden können.

3. Verteilungssystem nach Anspruch 1 und 2, dadurch gekennzeichnet, dass das Rohr oder die Gruppe von Rohren (30) zum Übertragen von Kühlenergie durch die Ventileinrichtungen (17, 18) angeordnet ist, als ein Rohr oder eine Gruppe von Rohren, die Wärmeenergie übertragen, verwendet wird.

4. Verteilungssystem nach den Ansprüchen 1 bis 3, dadurch gekennzeichnet, dass das Rohr zum Übertragen von Kühlenergie in zwei oder mehrere Rohre (30, 19) geteilt ist, um so Wärmeträger verschiedener Temperaturen zu übertragen.

5. Verteilungssystem nach Anspruch 4, dadurch gekennzeichnet, dass das Rohr (30), das eine Flüssigkeit höherer Temperatur enthält, angeordnet ist, als ein Rücklaufrohr für das Rohr (19) zu wirken, das eine Flüssigkeit einer niedrigeren Temperatur enthält.

## Revendications

1. Système de distribution d'énergie thermique urbaine dans lequel de l'énergie thermique liée à un véhicule thermique est créée de façon concentrée pour le chauffage et/ou le refroidissement de bâtiments et est destinée à être distribuée à des appareils de chauffage (16) de plusieurs bâtiments (14) par une canalisation ou un groupe de canalisations (10) et, de manière correspondante, de l'énergie de refroidissement est destinée à être distribuée à des appareils de refroidissement (15) par une autre canalisation ou un autre groupe de canalisations (30), caractérisé en ce que le système est réalisé de manière que les températures des véhicules thermiques qui reviennent des appareils de refroidissement et de chauffage (15, 16) des bâtiments sont essentiellement égales pendant la période au cours de laquelle des effets de chauffage et de refroidissement sont tous deux nécessaires, et en ce que les véhicules thermiques sont destinés à être renvoyés vers la centrale de production d'énergie par une canalisation commune de retour ou par un groupe de canalisations communes de retour (20).

2. Système de distribution selon la revendication 1, caractérisé en ce que la canalisation ou le groupe de canalisations (30) destiné à transmettre de l'énergie de refroidissement est raccordé à la canalisation ou au groupe de canalisations (10) destiné à transmettre l'énergie de chauffage par un dispositif à vannes ou analogue (17) et, de manière correspondante, dans le bâtiment ou au voisinage du bâtiment, par un second dispositif à vannes ou analogue (18), afin que, lorsque le dispositif à vannes (17, 18) est en position d'ouverture, la canalisation ou le groupe de canalisations (30) de transmission d'énergie de refroidissement puisse être utilisé pour le stockage du véhicule thermique chaud.

3. Système de distribution selon les revendications 1 et 2, caractérisé en ce que la canalisation ou le groupe de canalisations (30) destiné à transmettre l'énergie de refroidissement est destiné à être utilisé, grâce au dispositif à vannes (17, 18), comme canalisation ou groupe de canalisations de transmission d'énergie de chauffage.

4. Système de distribution selon les revendications 1 à 3, caractérisé en ce que la canalisation de transmission d'énergie de refroidissement est divisée en deux canalisations ou plus (30, 19) pour le transfert des véhicules thermiques à des températures différentes.

5. Système de distribution selon la revendication 4, caractérisé en ce que la canalisation (30) contenant un liquide de température relativement élevée est destinée à jouer le rôle d'une canalisation de retour pour la canalisation (19) contenant un liquide à une plus basse température.
